(19) Europäisches Patentamt / European Patent Office / Office européen des brevets

(11) **EP 3 778 960 B1**

(12) **EUROPEAN PATENT SPECIFICATION**

(45) Date of publication and mention
of the grant of the patent:
**27.12.2023 Bulletin 2023/52**

(21) Application number: **19776026.7**

(22) Date of filing: **29.03.2019**

(51) International Patent Classification (IPC):
**C22C 38/00** $^{(2006.01)}$  **B23K 20/04** $^{(2006.01)}$
**C21D 8/02** $^{(2006.01)}$  **C22C 38/02** $^{(2006.01)}$
**C22C 38/04** $^{(2006.01)}$  **C22C 38/06** $^{(2006.01)}$
**C22C 38/42** $^{(2006.01)}$  **C22C 38/44** $^{(2006.01)}$
**C22C 38/46** $^{(2006.01)}$  **C22C 38/48** $^{(2006.01)}$
**C22C 38/50** $^{(2006.01)}$  **C22C 38/54** $^{(2006.01)}$
**C22C 38/52** $^{(2006.01)}$  **C22C 38/58** $^{(2006.01)}$
**B32B 15/01** $^{(2006.01)}$  **C21D 6/00** $^{(2006.01)}$
**C21D 8/00** $^{(2006.01)}$  **C21D 9/00** $^{(2006.01)}$
**C21D 9/46** $^{(2006.01)}$

(52) Cooperative Patent Classification (CPC):
**C22C 38/004; B32B 15/011; C21D 6/004;
C21D 6/005; C21D 8/005; C21D 8/0226;
C21D 8/0263; C21D 9/0068; C21D 9/46;
C22C 38/001; C22C 38/002; C22C 38/005;
C22C 38/02; C22C 38/04; C22C 38/06;** (Cont.)

(86) International application number:
**PCT/JP2019/014296**

(87) International publication number:
**WO 2019/189871 (03.10.2019 Gazette 2019/40)**

(54) **DUPLEX STAINLESS-CLAD STEEL PLATE AND PRODUCTION METHOD THEREOF**

DUPLEX-STAHLBLECH MIT ROSTFREIEM ÜBERZUG UND VERFAHREN ZU SEINER HERSTELLUNG

PLAQUE D'ACIER DUPLEX REVÊTUE D'ACIER INOXYDABLE ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2018 JP 2018068220**

(43) Date of publication of application:
**17.02.2021 Bulletin 2021/07**

(73) Proprietor: **NIPPON STEEL Stainless Steel
Corporation
Tokyo 100-0005 (JP)**

(72) Inventors:
• **KAWA, Masatomo**
  **Tokyo 100-0005 (JP)**
• **OIKAWA, Yuusuke**
  **Tokyo 100-0005 (JP)**
• **TSUGE, Shinji**
  **Tokyo 100-0005 (JP)**
• **ANDOH, Junpei**
  **Tokyo 100-0005 (JP)**
• **YAMAMOTO, Yoichi**
  **Tokyo 100-0005 (JP)**

(74) Representative: **Zimmermann & Partner
Patentanwälte mbB
Postfach 330 920
80069 München (DE)**

(56) References cited:
**WO-A1-2008/093453  WO-A1-2011/102499
WO-A1-2011/102499  WO-A1-2014/148540**

WO-A1-2015/001177    CN-A- 106 425 319
JP-A- H1 161 350    JP-A- 2001 009 589
JP-A- 2006 328 460    JP-A- 2016 527 394
JP-A- 2018 028 146

(52)  Cooperative Patent Classification (CPC): (Cont.)
       **C22C 38/42; C22C 38/44; C22C 38/46;**
       **C22C 38/48; C22C 38/50; C22C 38/52;**
       **C22C 38/54; C22C 38/58;** B23K 20/04;
       C21D 6/007; C21D 2211/001; C21D 2211/005;
       C21D 2251/02; Y02A 20/124

**Description**

TECHNICAL FIELD

The present invention relates to a duplex stainless clad steel plate and a method for producing the duplex stainless clad steel plate.

BACKGROUND ART

A ferrite-austenitic duplex stainless steel (hereinafter, referred to simply as "duplex stainless steel") is excellent in corrosion resistance. Therefore, the ferrite-austenitic duplex stainless steel is a material that is appropriate in a harsh corrosive environment. Examples of the corrosive environment include a high chloride environment that involves exposure to seawater and a corrosive environment in plant facilities that involves exposure to an acid solution such as phosphorus acid and sulfuric acid. In such corrosive environments, duplex stainless steels are used in a desalination plant, a flue gas desulfurization facility, a reserve tank of a chemical, structure member pumps, valves, and the like such as oil country tubular goods, a heat exchanger, and the like.

Here, a duplex stainless steel has a composite steel micro-structure constituted by austenite phases and ferritic phases with a ratio of approximately 1: 1. As compared with an austenitic stainless steel having an equivalent corrosion resistance, the duplex stainless steel is excellent in economical efficiency because the duplex stainless steel has a low content of Ni and a high content of N.

However, as compared with carbon steels and low alloy steels, the duplex stainless steel is high in material cost because the duplex stainless steel contains a large amount of alloying elements such as Cr, Ni, and Mo. In addition, it is possible a price of the duplex stainless steel significantly changes due to a rise in prices of the alloying elements. Use of the duplex stainless steel can therefore be limited mainly from a cost aspect.

With consideration given to the cost aspect, using a clad steel plate as a material is effective. The clad steel plate refers to a material made by bonding two or more different kinds of metals together. As compared with a steel plate made only of a high alloy steel (hereinafter, referred to as "solid steel plate"), the clad steel plate allows an amount of a high alloy steel to be reduced, and thus a material cost can be reduced.

With a material having an excellent property being bonded to a base metal (hereinafter, the material bonded to the base metal will be denoted as "cladding material"), such a clad steel plate provides excellent properties of both the cladding material and the base metal.

For example, a possible case is one in which a high alloy steel having properties required in its usage environment is used as the cladding material, and a carbon steel or a low alloy steel having a toughness and a strength required in its usage environment is used as the base metal. In such a case, the material cost can be reduced as described above, and in addition, the same properties as those of a solid steel plate, and the same strength and toughness as those of a carbon steel and a low alloy steel can be ensured. This allows compatibility between economic efficiency and functionality to be established.

In the circumstances described above, there have been increasing needs of clad steel plate including duplex stainless steels in recent years in various industrial fields. However, in using a clad steel plate, a bonding strength between a cladding material and a base metal is important. If the bonding strength is low, the cladding material and the base metal are separated from each other during its use, and desired properties such as corrosion resistance and a desired strength may not be obtained. In addition, there is a possible risk of development of a hole in a structure, collapse of a structure, or the like.

Patent Document 1 discloses a technique of increasing a bonding strength of an austenitic stainless clad steel plate by setting a rolling reduction at 950°C or more calculated as plate thickness before rolling / plate thickness after rolling at 1.5 or more, while a high degree of vacuum of $10^{-4}$ Torr (0.013 Pa) or less is kept.

For an austenitic stainless clad steel plate disclosed in Patent Document 2, a hydrogen content of its base metal is controlled to be 1 ppm or less by retaining the austenitic stainless clad steel plate within a range of temperature T = 250 to 650°C for a time t = 3 * exp(2000/T) minutes or more after rolling. This avoids delayed fracture of its interface.

In contrast, for a duplex stainless clad steel plate, the precipitation of $\sigma$ phases is reduced or prevented by a method described in Patent Document 4. Specifically, Patent Document 4 discloses a duplex stainless clad steel plate in which, tolerable amounts of specific elements of impurity elements of a duplex stainless steel being a cladding material are strictly limited.

Patent Document 5 discloses a duplex stainless clad steel plate in which a coefficient of kinetic friction of a surface of its cladding material is controlled to cause fewer accretions such as sea salt grains and barnacles in a case where water runs along its surface. This makes the duplex stainless clad steel plate have a higher corrosion resistance as compared with a duplex stainless clad steel plate having the same modified pitting resistance equivalent number and $\sigma$ phase area fraction.

Patent Document 6 describes a clad steel which has excellent corrosion resistance. The two-phase stainless steel for clad steel contains, in mass%, C: 0.03% or less, Si: 0.05-1.0%, Mn: 0.1-6.0%, P: 0.05% or less, S: 0.0001-0.0014%, Cr: 20.0-28.0%, Ni: 0.5-9.0%, Mo: 5.0% or less, W: 3% or less, Co: 1.0% or less, Cu: 3.0% or less, N: 0.05-0.35%, V: 0.5% or less, Nb: 0.15% or less, Ti: 0.05% or less, B: 0.0050% or less, Al: 0.003-0.05%, Ca: 0.0005-0.0040%, Mg: 0.0030% or less, O: 0.001-0.004%, with the balance being Fe and inevitable impurities. The weight ratio between Ca and Al in oxides of 5 $\mu$m or more in maximum diameters on the steel surface is 0.5-3.5.

LIST OF PRIOR ART DOCUMENTS

PATENT DOCUMENT

Patent Document 1: JP6127939B

Patent Document 2: JP6-7803A

Patent Document 3: JP3779043B

Patent Document 4: JP5803890B

Patent Document 5: JP5842993B

Patent Document 6: JP 2018028146A

SUMMARY OF INVENTION

TECHNICAL PROBLEM

However, Patent Documents described above have no mention of the following problems. Specifically, in Patent Document 1, a long-time vacuum drawing is needed to ensure a degree of vacuum of $10^{-4}$ Torr (0.013 Pa) or less. As a result, there is a problem of increasing a production cost.
In addition, the steel plate disclosed in Patent Document 1 is a clad steel plate including an austenitic stainless steel, and Patent Document 1 does not disclose producing conditions suitable for a clad steel plate including a duplex stainless steel plate.
Similarly, the steel plate disclosed in Patent Document 2 is also a clad steel plate including an austenitic stainless steel, and thus Patent Document 2 does not disclose producing conditions suitable in a case where a duplex stainless steel plate is used.
Here, a steel micro-structure of a duplex stainless steel transforms in accordance with a thermal history in production or during welding, and it is conceivable that properties of the duplex stainless steel change accordingly. Of this transformation of the steel micro-structure, what is practically problematic is sigma phases that precipitate in a temperature region from 600 to 900°C (hereinafter, referred to also as "$\sigma$ phases"). If $\sigma$ phases precipitate, a corrosion resistance, a ductility, and a toughness of the duplex stainless steel are significantly decreased. For that reason, in a case where a duplex stainless steel plate is used as a cladding material of a clad steel plate, it is necessary to reduce or prevent the precipitation of $\sigma$ phases.
For a solid steel plate of a duplex stainless steel, there is, for example, a method disclosed in Patent Document 3 as a method for reducing or preventing the precipitation of $\sigma$ phases. According to the method disclosed in Patent Document 3, component ranges of Ni, Cr, Mo, N, Si, and Mn are regulated, and after the production, solution treatment is performed at not less than a temperature at which $\sigma$ phases precipitate. As a result, even in a large member, the precipitation of $\sigma$ phases can be reduced or prevented at a central portion of the member.
However, if the method disclosed in Patent Document 3 is applied to a clad steel plate including a duplex stainless steel, and a grain size of a base metal is increased. As a result, the clad steel plate may not provide a necessary strength and toughness.
In the invention disclosed in Patent Document 4, contents of impurities are strictly limited in order to delay the precipitation of $\sigma$ phases while keeping a corrosion resistance. Controlling the contents of impurities to certain contents or less in such a manner leads to an increase in production cost. In addition, in Patent Document 4, its content of Si is reduced, and it is thus possible that, for example, properties other than the corrosion resistance are decreased.
Patent Document 5 discloses a duplex stainless clad steel plate of which a corrosion resistance is successfully increased in a case where water runs along its surface, by controlling a coefficient of kinetic friction of its cladding material. However, the corrosion resistance cannot be exerted, for example, in a region that is hard to come into contact with running water or in which the running water is absent, such as a corner portion of a structure and an inside of a tank. In addition, Patent Document 5 has no mention of a peel strength of a clad material.

In view of the technical background described above, an objective of the present invention is to provide a duplex stainless clad steel plate having a good corrosion resistance and a good bonding strength and being low-cost, and a method for producing the duplex stainless clad steel plate.

SOLUTION TO PROBLEM

The present invention is made to solve the above problems and provide the following duplex stainless clad steel plate and method for producing the duplex stainless clad steel plate.

(1) A duplex stainless clad steel plate that includes a base metal and a cladding material bonded to the base metal, wherein

the base metal is made of a carbon steel or a low alloy steel,
the cladding material is made of a duplex stainless steel having a chemical composition that satisfies a value of modified pitting resistance equivalent number (PREN_Mn) in a range from 25 to 40, the modified pitting resistance equivalent number being calculated by the following formula (i),
a hydrogen content of the base metal is 1.0 ppm or less, and a hydrogen content of the cladding material is 3.0 ppm or less, wherein the hydrogen content is measured by the inert gas fusion method and the thermal conductivity method specified in JIS Z 2614:1990, and
a shearing strength of a bonding interface between the base metal and the cladding material is 350 MPa or more, wherein the shearing strength is measured by the shearing strength test conforming to JIS G 0601:2012:

$$PREN\_Mn = Cr + 3.3\,(Mo + 0.5W) + 16N - Mn \ldots (i)$$

where each symbol of an element in the formula (i) indicates a content of each element (mass percent) contained in the steel, and zero means a case where an element in question is not contained.

(2) The duplex stainless clad steel plate according to the above (1), wherein an area fraction of a $\sigma$ phase is less than 0.5% at a 0.5-mm position from a surface of the cladding material in a plate thickness direction.
(3) The duplex stainless clad steel plate according to the above (1) or (2), wherein a chemical composition of the duplex stainless steel consists of, in mass percent:

C: 0.030% or less;
Si: 1.00% or less;
Mn: 4.00% or less;
P: 0.050% or less;
S: 0.050% or less;
Ni: 2.00 to 10.00%;
Cr: 20.00 to 28.00%;
Mo: 5.00% or less;
Cu: 1.50% or less;
N: 0.080 to 0.300%;
W: 0 to 3.00%;
V: 0 to 0.50%;
Nb: 0 to 0.20%;
Ti: 0 to 0.050%;
Co: 0 to 1.50%;
B: 0 to 0.0050%;
Ca: 0 to 0.0050%;
Mg: 0 to 0.0030%;
Al: 0 to 0.50%;
REM: 0 to 0.50%; and

the balance: Fe and unavoidable impurities.

(4) The duplex stainless clad steel plate according to the above (3), wherein the chemical composition of the duplex stainless steel contains one or more elements selected from, in mass percent:

W: 0.1 to 3.00%;
V: 0.05 to 0.50%;
Nb: 0.01 to 0.20%;
Ti: 0.003 to 0.050%; and
Co: 0.01 to 1.50%.

(5) The duplex stainless clad steel plate according to the above (3) or (4), wherein the chemical composition of the duplex stainless steel contains one or more elements selected from, in mass percent:

B: 0.0003 to 0.0050%;
Ca: 0.0001 to 0.0050%;
Mg: 0.0001 to 0.0030%;
Al: 0.0030 to 0.50%; and
REM: 0.005 to 0.50%.

(6) A method for producing the duplex stainless clad steel plate according to any one of the above (1) to (5), the method comprising:

(a) a step of laminating a base metal made of a carbon steel or a low alloy steel having a surface and provided in advance with a hole that communicates with the surface, and a cladding material including a surface and made of a duplex stainless steel having the chemical composition according to any one of the above (1) and (3) to (5), forming a lamination surface by causing the surfaces to abut against each other, and sealing a circumference of the lamination surface by welding, to produce a clad rolled material;
(b) a step of performing vacuum drawing from the hole communicating with the lamination surface while heating the clad rolled material to a temperature of 200°C or more so that a degree of vacuum of the lamination surface reaches 0.10 Torr (13.3 Pa) or less; and
(c) a step of heating, after the step (b), the clad rolled material within a range from 1050 to 1250°C, performing hot rolling with a rolling reduction of 60% or more within a temperature range of 1000°C or more, to produce the duplex stainless clad steel plate.

(7) The method for producing the duplex stainless clad steel plate according to the above (6), wherein, in the step (c), a rolling time at 950°C or less is set at 60 second or less, a rolling end temperature in the hot rolling is set at 850°C or more, and thereafter, an average cooling rate within a temperature range from 850°C to 650°C is set at 0.5°C/s or more.

ADVANTAGEOUS EFFECTS OF INVENTION

According to the present invention, a duplex stainless clad steel plate having a good corrosion resistance and a good bonding strength and being low-cost can be provided.

DESCRIPTION OF EMBODIMENTS

To solve the problems, the present inventors conducted the following studies. Specifically, the present investors investigated producing conditions and steel microstructures that cause decreases in the bonding strength and in corrosion resistance due to precipitation of σ phases in clad steel plates made by using various kinds of duplex stainless steels as their cladding materials. As a result, the following findings (a) to (c) were obtained.
(a) In a rolled material of a duplex stainless clad steel plate, a carbon steel or a low alloy steel to be a base metal and a duplex stainless steel to be a cladding material are in contact with each other. By bonding the carbon steel or the low alloy steel, and the duplex stainless steel together with a degree of vacuum of a lamination surface across which the carbon steel or the low alloy steel, and the duplex stainless steel are in contact with each other brought to 0.10 Torr (13.3 Pa) or less, a duplex stainless clad steel plate having a good bonding strength is obtained.

(b) If amounts of hydrogen contained in the base metal and the cladding material (hereinafter, denoted as "hydrogen contents") are large, the bonding strength tends to be decreased. For that reason, setting the hydrogen content of the base metal at 1.0 ppm or less and setting the hydrogen content of the cladding material at 3.0 ppm or less are effective. By setting the rolling reduction at 1000°C or more at 60% or more, a good bonding strength is obtained.

(c) In the duplex stainless steel being the cladding material, $\sigma$ phases that precipitate in producing decreases corrosion resistance. For that reason, controlling producing conditions appropriately to reduce or prevent the precipitation of $\sigma$ phases is effective.

The present invention was made based on the findings described above. Requirements of the present invention will be described below in detail.

1. Configuration of Present Invention

A duplex stainless clad steel plate according to the present invention includes a base metal and a cladding material bonded to the base metal. The base metal is made of a carbon steel or a low alloy steel. The cladding material is made of a duplex stainless steel described below.

2. Chemical Composition of Cladding material

The cladding material is made of a duplex stainless steel. A chemical composition of the cladding material makes a value of the following modified pitting resistance equivalent number (PREN_Mn) satisfy 25 to 40. Note that PREN_Mn is a typical index that indicates a pitting resistance of a stainless steel plate. PREN_Mn is a value obtained by subtracting Mn% from PREN, shown in the following formula (i):

$$\text{PREN\_Mn} = \text{Cr} + 3.3\,(\text{Mo} + 0.5\text{W}) + 16\text{N} - \text{Mn} \ldots \text{(i)}$$

where each symbol of an element in the formula (i) means a content of each element (mass percent) contained in the cladding material.

If a value of PREN_Mn is less than 25, a desired corrosion resistance equivalent to that of SUS 316, specifically such a corrosion resistance that a critical pitting temperature is 25°C or more, cannot be obtained. On the other hand, if the value of PREN_Mn is more than 40, the steel plate is hardened, decreasing workability. In addition, an alloy cost is also increased. Therefore, the value of PREN_Mn ranges from 25 to 40. PREN_Mn is preferably 30 or more.

Here, a chemical composition of the cladding material, that is, the duplex stainless steel preferably consists of, in mass percent, C: 0.030% or less, Si: 1.00% or less, Mn: 4.00% or less, P: 0.050% or less, P: 0.050% or less, Ni: 2.00 to 10.00%, Cr: 20.00 to 28.00%, Mo: 5.00% or less, Cu: 1.50 % or less, N: 0.080 to 0.300%, W: 0 to 3.00%, V: 0 to 0.50%, Nb: 0 to 0.20%, Ti: 0 to 0.050%, Co: 0 to 1.50%, B: 0 to 0.0050%, Ca: 0 to 0.0050%, Mg: 0 to 0.0030%, Al: 0 to 0.50%, REM: 0 to 0.50%, and the balance: Fe and unavoidable impurities.

The reasons for limiting contents of elements in the preferable chemical composition of the cladding material are as follows. In the following description, the symbol "%" for the contents means "percent by mass."

C: 0.030% or less

C (carbon) is an element that has a significant influence on a stability of austenite phases. If more than 0.030% of C is contained, intergranular corrosion occurs due to precipitation of Cr carbide. Therefore, a content of C is preferably 0.030% or less, more preferably 0.020% or less. From a viewpoint of corrosion resistance, the content of C is preferably low, but with currently existent steel making facilities, decreasing the content of C to less than 0.002% leads to a significant increase in cost. Therefore, the content of C is preferably 0.002% or more.

Si: 1.00% or less

Si (silicon) is used as a deoxidizing element. In addition, Si can be contained for enhancement of oxidation resistance. However, if more than 1.00% of Si is contained, Si promotes precipitation of $\sigma$ phases, degrading a corrosion resistance of the base metal (steel plate). Therefore, a content of Si is preferably 1.00% or less, more preferably 0.80% or less, still more preferably 0.60% or less. On the other hand, excessive reduction of Si leads to an increase in cost in refining steel. Accordingly, the content of Si is more preferably 0.03% or more, still more preferably 0.20% or more.

Mn: 4.00% or less

Mn (manganese) has an effect of decreasing an activity of nitrogen to reduce or prevent production of air bubbles. However, if Mn is contained excessively, corrosion resistance and hot workability are decreased. Therefore, a content of Mn is preferably 4.00% or less, more preferably 2.50% or less, still more preferably 2.00% or less. On the other hand, the content of Mn is preferably 0.30% or more to obtain the effect.

P: 0.050% or less

P (phosphorus) is contained in a raw material of Cr or the like and is an impurity element that is unavoidably contained. If P is contained excessively, weldability and the like are decreased, and thus the less a content of P, the more preferable it is. A content of P is preferably 0.050% or less, more preferably 0.040% or less. On the other hand, if P is reduced excessively, a production cost is increased, and thus the content of P is preferably 0.005% or more.

S: 0.050% or less

S (sulfur) is an impurity element that is unavoidably contained. S can bind with Mn to form inclusions, serving as a starting point of rusting. Accordingly, a content of S is preferably 0.050% or less. From a viewpoint of enhancing corrosion resistance, the content of S is more preferably 0.0030% or less. On the other hand, if S is reduced excessively, a production cost is increased, and thus the content of S is preferably 0.0001% or more.

Ni: 2.00 to 10.00%

Ni (nickel) is an austenite stabilizing element and is useful for adjusting a stability of austenite phases. In addition, Ni has an effect of enhancing corrosion resistance. Accordingly, a content of Ni is preferably 2.00% or more, more preferably 4.00% or more. On the other hand, more than 10.00% of Ni contained leads to an increase in raw-material cost. The more than 10.00% of Ni contained also makes it difficult to obtain a ferrite-austenite duplex micro-structure. Therefore, the content of Ni is preferably 10.00% or less, more preferably 8.00% or less.

Cr: 20.00 to 28.00%

Cr (chromium) is useful for ensuring corrosion resistance. Accordingly, a content of Cr is preferably 20.00% or more, more preferably 21.00% or more, still more preferably 22.00% or more. However, if Cr is contained excessively, Cr promotes precipitation of σ phases, degrading a corrosion resistance of the steel plate. Accordingly, the content of Cr is preferably 28.00% or less, more preferably 27.00% or less, still more preferably 26.00% or less.

Mo: 5.00% or less

Mo (molybdenum) enhances corrosion resistance. However, excessively contained Mo promotes precipitation of σ phases, which in turn can degrade a corrosion resistance of the steel plate. Therefore, a content of Mo is preferably 5.00% or less, more preferably 4.00% or less, still more preferably 3.50% or less. On the other hand, the content of Mo is preferably 0.01% or more to obtain the effect.

Cu: 1.50% or less

Cu (copper) is an element that enhances corrosion resistance such as resistance to sulfuric acid. However, excessively contained Cu leads to an increase in raw-material cost, decreasing hot workability. Accordingly, a content of Cu is preferably 1.50% or less, more preferably 1.00% or less, still more preferably 0.50% or less. On the other hand, the content of Cu is preferably 0.01% or more to obtain the effect.

N: 0.080 to 0.300%

N (nitrogen) is an element that has a significant influence on a stability of austenite phases. In addition, N has an effect of enhancing corrosion resistance in a case where N is dissolved and present in the steel. Accordingly, a content of N is preferably 0.080% or more, more preferably 0.130% or more, still more preferably 0.150% or more. However, more than 0.300% of N contained causes nitrides to precipitate, which has an adverse effect on a welding property of a clad material. Therefore, the content of N is preferably 0.300% or less, more preferably less than 0.250%, still more preferably less than 0.200%.

In the present invention, in addition to these elements, the duplex stainless steel being the cladding material may contain one or more elements selected from W, V, Nb, Ti, and Co in order to enhance corrosion resistance and weldability.

W: 0 to 3.00%

W (tungsten) is an element that enhances corrosion resistance. Therefore, W may be contained as necessary. However, excessively contained W leads to an increase in raw-material cost. In addition, the excessively contained W increases a load in rolling the steel plate, which tends to bring about a production defect. Accordingly, a content of W is preferably 3.00% or less, more preferably 2.00% or less, still more preferably 1.00% or less. On the other hand, the content of W is preferably 0.1% or more to obtain the effect.

V: 0 to 0.50%

V (vanadium) is an element that enhances corrosion resistance and thus may be contained as necessary. However, more than 0.50% of V contained increases a load in rolling, which tends to bring about a production defect. Therefore, a content of V is preferably 0.50% or less, more preferably 0.20% or less. On the other hand, the content of V is preferably 0.05% or more to obtain the effect.

Nb: 0 to 0.20%

Nb (niobium) has an effect of reducing or preventing coarsening of grains in a welding heat affected zone (HAZ) and thus may be contained as necessary. However, more than 0.20% of Nb contained decreases hot workability, and therefore a content of Nb is preferably 0.20% or less. More preferably, the content of Nb is 0.10% or less. On the other hand, the content of Nb is preferably 0.01% or more to obtain the effect.

Ti: 0 to 0.050%

Ti (titanium) has, as with Nb, an effect of reducing or preventing coarsening of grains in a welding heat affected zone (HAZ) as well as making solidification structures into fine equiaxial crystals. Therefore, Ti may be contained as necessary. However, more than 0.050% of Ti contained decreases hot workability. Therefore, a content of Ti is preferably 0.050% or less, more preferably 0.020% or less. On the other hand, the content of Ti is preferably 0.003% or more to obtain the effect.

Co: 0 to 1.50%

Co (cobalt) is an element that enhances corrosion resistance and thus may be contained as necessary. However, more than 1.50% of Co contained causes a rise in alloy cost. Therefore, a content of Co is preferably 1.50% or less, more preferably 1.00% or less. On the other hand, the content of Co is preferably 0.01% or more to obtain the effect.

In addition to these elements, the duplex stainless steel to be used for the clad steel plate according to the present invention may contain one or more elements selected from B, Ca, Mg, Al, and rare earth metal (REM) for deoxidation and desulfurization in refining, and in order to enhance workability in rolling.

B: 0 to 0.0050%

B (boron) has an effect of enhancing hot workability. Therefore, B may be contained as necessary. However, more than 0.0050% of B contained significantly degrades corrosion resistance. Therefore, a content of B is preferably 0.0050% or less, more preferably 0.0030% or less. On the other hand, the content of B is preferably 0.0003% or more to obtain the effect.

Ca: 0 to 0.0050%

Ca (calcium) may be contained for deoxidation and desulfurization. However, more than 0.0050% of Ca contained tends to bring about hot working cracking and degrades corrosion resistance. Therefore, a content of Ca is preferably 0.0050% or less. On the other hand, the content of Ca is preferably 0.0001% or more to obtain the effect.

Mg: 0 to 0.0030%

Mg (magnesium) has an effect of deoxidation as well as an effect of refining solidification structures. Therefore, Mg may be contained as necessary. However, more than 0.0030% of Mg contained leads to an increase in cost in a steelmaking process. Therefore, a content of Mg is preferably 0.0030% or less. On the other hand, the content of Mg is preferably 0.0001% or more to obtain the effect.

Al: 0 to 0.50%

Al (aluminum) may be contained as necessary for deoxidation and desulfurization. However, more than 0.50% of Al contained leads to an occurrence of a production defect and an increase in raw-material cost. Therefore, a content of Al is preferably 0.50% or less. On the other hand, the content of Al is preferably 0.0030% or more to obtain the effect.

REM: 0 to 0.50%

REM (rare earth metal) has an effect of enhancing hot workability and thus may be contained as necessary. However, more than 0.50% of REM contained leads to a loss of producibility and an increase in cost. Therefore, a content of REM is preferably 0.50% or less, more preferably 0.20% or less. On the other hand, the content of REM is preferably 0.005% or more, more preferably 0.020% or more to obtain the effect.

Here, REM is a general term for 17 elements including Y, Sc, and 15 lanthanoid elements. One or more of these 17 elements can be contained in the steel material, and the content of REM means a total content of these elements.

In the chemical composition of the steel material according to the present invention, the balance consists of Fe and unavoidable impurities. As used herein, the term "unavoidable impurities" means components that are mixed in alloy in producing the steel material industrially due to raw materials such as ores and scraps, and various factors of a producing process, and are allowed to be mixed in the steel material within ranges in which the impurities have no adverse effect on the present invention.

3. Area Fraction of Sigma Phases in Cladding material

In the cladding material, it is preferable that an area fraction of $\sigma$ phases is less than 0.5% at a 0.5-mm position from a surface of the cladding material in a plate thickness direction. The area fraction of the $\sigma$ phases is more preferably less than 0.1%.

If a $\sigma$ phase area fraction is 0.5% or more, a critical pitting temperature difference described below is increased, which may result in a failure to obtain a desired corrosion resistance. Because the smaller the critical pitting temperature difference is, the more preferable it is, and thus the smaller the $\sigma$ phase area fraction, the more preferable it is. The $\sigma$ phase area fraction is measured by structure observation conducted under an optical microscope.

4. Hydrogen Content

4-1. Hydrogen Content of Base Metal

A hydrogen content of the base metal is to be 1.0 ppm or less. This is because a hydrogen content of the base metal being more than 1.0 ppm significantly decreases shearing strength. As long as the hydrogen content of the base metal falls within the range, the decrease in bonding strength is not recognized, and thus no limitation is imposed on the hydrogen content of the base metal.

4-2. Hydrogen Content of Cladding material

A hydrogen content of the cladding material is to be 3.0 ppm or less. This is because a hydrogen content of the cladding material being more than 3.0 ppm significantly decreases shearing strength. As long as the hydrogen content of the base metal falls within the range, the decrease in bonding strength is not recognized, and thus no limitation is imposed on the hydrogen content of the base metal.

A detailed mechanism of how the hydrogen content influences the shearing strength has not been clarified. However, the following factors are conceivable. Specifically, it is conceivable that hydrogen diffuses into a bonding interface that forms a vacuum during heating a slab, interfering with bonding. It is also conceivable that brittle fracture due to hydrogen may tend to occur when a shearing stress is applied to a clad material. In the present invention, the hydrogen content is measured by the inert gas fusion method and the thermal conductivity method specified in JIS Z 2614:1990.

5. Shearing Strength

In the present invention, as a desired property, a shearing strength of the bonding interface between the base metal and the cladding material is to be 350 MPa or more. The shearing strength of the bonding interface is preferably 380 MPa or more, more preferably 430 MPa or more.

The shearing strength is measured by the shearing strength test conforming to JIS G 0601:2012. Test specimens are taken from a plurality of regions of a duplex stainless clad steel plate, and the test specimens taken were used for the shearing strength test. A minimum value of obtained shearing strengths of the test specimens is defined as a shearing strength of the clad steel plate.

6. Corrosion Resistance

6-1. Critical Pitting Temperature

In the present application, a case where a critical pitting temperature is 20°C or more is evaluated as having a favorable corrosion resistance as desired, and a case where the critical pitting temperature is 25°C or more is evaluated as having a more favorable corrosion resistance. Additionally, a case where the critical pitting temperature is 30°C or more is evaluated as having a still more favorable corrosion resistance, and a case where the critical pitting temperature is 35°C or more is evaluated as having an even still more favorable corrosion resistance. The critical pitting temperature can be determined by the ferric chloride corrosion test conforming to ASTM G 48, Method E.

6-2. Critical Pitting Temperature Difference

In the present application, the critical pitting temperature is mainly used as an evaluation index for the corrosion resistance, and in addition, a degree of decrease in the corrosion resistance due to precipitation of $\sigma$ phases is also evaluated. As this evaluation index, a critical pitting temperature difference is used. A case where the critical pitting temperature difference is 10°C or less is evaluated as being low in the decrease in the corrosion resistance due to precipitation of $\sigma$ phases, and a case where the critical pitting temperature difference is 5°C or less is evaluated as being lower in the decrease in the corrosion resistance.

The critical pitting temperature difference is calculated as follows. Specifically, a cladding material is cut as a sample from a duplex stainless clad steel plate, subjected to solution heat treatment at 1050°C or more for 10 minutes or more, and then water-cooled. Thereafter, the critical pitting temperature is calculated by the same method as that described above, and a difference between the critical pitting temperature and a critical pitting temperature of a case where the solution heat treatment is not performed is determined as the critical pitting temperature difference.

7. Producing Method

A method for producing the duplex stainless clad steel plate according to the present invention will be described. In order to obtain a duplex stainless clad steel plate having a good corrosion resistance and a good bonding strength, it is necessary to appropriately control a chemical composition, a steel micro-structure, and producing conditions of a steel.

7-1. Method for Producing Carbon Steel and Low Alloy Steel as well as Duplex Stainless Steel

A carbon steel and a low alloy steel, as well as a duplex stainless steel are produced by a method described below. Specifically, a well-known method using a converter, an electric furnace, a vacuum furnace, or the like is performed to melt the steels, and then the steels are formed into slabs by the continuous casting process or the ingot-casting-blooming process.

The resultant slabs are subjected to hot rolling in normally-used conditions to be formed into hot-rolled plates. The resultant hot-rolled plates may be subjected to annealing, pickling, polishing, and the like as necessary. Note that no specific limitations are imposed on components of the carbon steel or the low alloy steel for the base metal.

7-2. Welding and Vacuum Drawing

The carbon steel or the low alloy steel to be the base metal provided in advance with a hole for vacuum drawing on its side surface and the duplex stainless steel as the cladding material having the chemical composition previously described are laminated together, and surfaces of the base metal and the cladding material are caused to abut against each other. Subsequently, welding is performed on a circumference of a surface across which the base metal and the cladding material laminated together abut against each other (hereinafter, referred to as "lamination surface") to seal four sides of the base metal and the cladding material, producing a clad rolled material. At that time, the welding may be arc welding, laser welding, electron beam welding, and the like, and is not limited to a specific welding.

The vacuum drawing is performed from the hole for the vacuum drawing of the clad rolled material in such a manner that a degree of vacuum of the lamination surface reaches as high as 0.10 Torr (13.3 Pa) or less. The hole for vacuum drawing communicates with the lamination surface through the side surface of the base metal in the material, and thus the lamination surface of the clad rolled material can form a high vacuum. In the vacuum drawing, the clad rolled material is heated at a temperature of 200°C or more.

Here, if the degree of vacuum of the lamination surface is as low as more than 0.10 Torr (13.3 Pa), a bonding strength between the cladding material and the base metal becomes low, and thus a bonding strength of the duplex stainless clad steel plate is decreased. Therefore, the degree of vacuum is 0.10 Torr (13.3 Pa) or less, preferably 0.05 Torr (6.7 Pa) or less. The bonding strength tends to increase with an increase in the degree of vacuum, but the bonding strength levels off even if the degree of vacuum is made as high as less than 0.001 Torr (0.13 Pa), and thus the degree of vacuum is more preferably 0.001 Torr (0.13 Pa) or more.

In addition, if the heating temperature is less than 200°C, the hydrogen contents of the cladding material and the base metal are increased, and thus the bonding strength of the duplex stainless clad steel plate is decreased. Therefore, the heating temperature is 200°C or more. Although hydrogen tends to be reduced with an increase in the heating temperature, the heating temperature is more preferably 450°C or less, with consideration given to cracking during transportation due to 475°C embrittlement, a heating cost, and the like. Thereafter, the hole for vacuum drawing is enclosed.

The resultant clad rolled material may be subjected to hot rolling as it is, or a base metal, a cladding material, a release agent, a cladding material, and a base material may be laminated in this order so that two clad rolled materials are stacked with the release agent applied therebetween, which may be subjected to the hot rolling as clad rolled materials. In a case where the two clad rolled materials are stacked, it is desirable that the base metals and the cladding materials each have the same thickness to reduce a warp in plates in cooling. Of course, a method of assembling the clad rolled material need not be limited to the above assembling methods.

7-3. Hot Rolling

Subsequently, to perform the hot rolling on the resultant clad rolled material, it is necessary to heat the clad rolled material within a range from 1050 to 1250°C. If the heating temperature is less than 1050°C, the hot workability is degraded, and thus the bonding strength cannot be obtained. Therefore, the heating temperature is 1050°C or more, more preferably 1100°C or more. On the other hand, if the heating temperature is more than 1250°C, a slab deforms in a heating furnace or tends to develop a flaw in the hot rolling. Therefore, the heating temperature is 1250°C or less, more preferably 1220°C or less.

In performing the hot rolling on the heated clad rolled material, the hot rolling is performed with a rolling reduction of 60% or more in a temperature range of 1000°C or more in terms of a steel plate surface temperature. This is because if the rolling reduction is less than 60% in the temperature range of 1000°C or more in terms of the steel plate surface temperature, the bonding strength between the cladding material and the base metal is decreased. The higher the temperature of the rolling is, the higher the bonding strength is. In addition, the precipitation of $\sigma$ phases during and after the rolling is reduced or prevented. Therefore, no specific limitation is imposed on the rolling reduction. The rolling reduction is calculated as (plate thickness before rolling - plate thickness after rolling) / (plate thickness before rolling).

To reduce or prevent the precipitation of $\sigma$ phases, it is preferable to set a rolling time at 60 seconds or less at a steel plate surface temperature of 950°C or less. It is known that $\sigma$ phases in a duplex stainless steel precipitate at approximately 950°C or less, which however depends on an amount of the alloying elements. For that reason, if the rolling time at 950°C or less is more than 60 seconds, a time for which the clad rolled material is put in a temperature range of the precipitation of $\sigma$ phases is increased. This promotes the precipitation of $\sigma$ phases, decreasing corrosion resistance. The rolling time at 950°C or less is thus preferably 60 seconds or less, more preferably 40 seconds or less. The shorter the rolling time at 950°C or less, the more preferable it is.

In addition, it is preferable to set a rolling end temperature of the hot rolling at 850°C or more in terms of the steel plate surface temperature. When a steel plate is rolled, processing-incurred heat occurs, and thus a temperature drop rate during the rolling is low. It is also known that the grater a strain introduced in rolling, the more the precipitation of $\sigma$ phases is promoted. For that reason, if the rolling end temperature is less than 850°C, a great strain is introduced into the cladding material, promoting the precipitation of $\sigma$ phases. As a result, corrosion resistance is decreased. Therefore, the rolling end temperature is preferably 850°C or more, more preferably 900°C or more, still more preferably 950°C or more, in terms of the steel plate surface temperature.

After the hot rolling is ended, it is preferable to perform cooling within a temperature range from 850 to 650°C at an average cooling rate of 0.5°C/s or more. If the cooling rate is less than 0.5°C/s, the precipitation of $\sigma$ phases is promoted, and a decrease in corrosion resistance occurs. Therefore, after the hot rolling is ended, the average cooling rate within the temperature range from 850°C to 650°C is preferably 0.5°C/s or more, more preferably 1°C/s or more, still more preferably 2°C/s or more. The higher the cooling rate is, the more the precipitation of σ phases is reduced or prevented, and thus the cooling rate is not set at a specific cooling rate. A method for cooling after the rolling is not particularly specified, but examples of the method include air cooling, forced air cooling, water cooling, and the like. To control transformation of the base metal, which is a plain steel or a low alloy steel, the cooling may be stopped at 650°C or less in accordance with the chemical component, the plate thickness, the cooling rate, and the like of the base metal.

According to the present invention, a duplex stainless clad steel plate excellent in shearing strength and corrosion resistance can be provided. The duplex stainless clad steel plate according to the present invention dispenses with countermeasures for separation, strict control of the composition of the cladding material, additional heat treatment, and the like. In addition, the clad steel plate has no limitation on its applications and is applicable to structure members for which solid steel plates have been used. Therefore, the clad steel plate will significantly contribute to reduction in cost.

The present invention will be described below more specifically with reference to Examples, but the present invention is not limited to these Examples.

EXAMPLES

Duplex stainless steels having chemical compositions shown in Table 1 were melted and formed into slabs, which were subjected to processes including hot rolling, annealing, and pickling to be produced into duplex stainless steels having a thickness of 30 mm. The resultant duplex stainless steels were used as cladding materials to be produced into duplex stainless clad steels having a thickness of 16 mm, with carbon steels having a thickness of 130 mm used as base metals. A chemical composition of the carbon steel contained, in mass percent, C: 0.12%, Si: 0.32%, Mn: 1.45%, P: 0.012%, and S: 0.003%.

[Table 1]

TABLE 1

CHEMICAL COMPOSITION (mass%, BALANCE: Fe AND IMPURITIES)

| STEEL | C | Si | Mn | P | S | Ni | Cr | Mo | Cu | N | W | V | Nb | Ti | Co | B | Ca | Mg | Al | REM | PREN_Mn |
|---|---|---|---|---|---|---|---|---|---|---|---|---|---|---|---|---|---|---|---|---|---|
| A | 0.009 | 0.98 | 0.58 | 0.041 | 0.0012 | 9.13 | 22.47 | 4.75 | 0.94 | 0.084 | 0.52 | 0.055 | - | 0.030 | - | - | - | - | - | - | 39.8 |
| B | 0.012 | 0.32 | 1.80 | 0.025 | 0.0005 | 5.77 | 22.51 | 3.08 | 0.17 | 0.162 | - | 0.091 | - | - | - | 0.0020 | 0.0023 | - | 0.026 | - | 33.4 |
| C | 0.011 | 0.48 | 1.95 | 0.031 | 0.0018 | 2.11 | 20.10 | 0.10 | 0.15 | 0.170 | 2.63 | - | 0.17 | - | - | - | - | 0.0021 | - | 0.07 | 25.5 |
| D | 0.015 | 0.41 | 1.30 | 0.028 | 0.0005 | 5.50 | 23.78 | 1.10 | 0.41 | 0.150 | - | - | 0.03 | 0.004 | - | - | 0.0025 | - | 0.019 | - | 28.5 |
| E | 0.015 | 0.40 | 1.32 | 0.023 | 0.0005 | 5.85 | 24.33 | 2.10 | 0.60 | 0.175 | - | - | 0.03 | - | - | - | 0.0025 | - | - | - | 32.7 |
| F | 0.028 | 0.89 | 0.34 | 0.013 | 0.0060 | 3.49 | 27.30 | 0.41 | 1.41 | 0.291 | 1.81 | - | - | - | - | - | - | - | - | - | 36.0 |
| G | 0.014 | 0.23 | 0.84 | 0.025 | 0.0004 | 7.01 | 25.16 | 3.06 | 0.13 | 0.137 | - | - | - | - | - | - | 0.0035 | 0.0010 | - | - | 36.6 |
| H | 0.005 | 0.57 | 3.88 | 0.025 | 0.0004 | 4.06 | 21.70 | 4.01 | 1.22 | 0.232 | 1.01 | 0.060 | - | 0.030 | - | 0.0041 | - | - | - | 0.03 | 36.4 |
| I | 0.012 | 0.25 | 1.43 | 0.024 | 0.0005 | 5.90 | 22.55 | 3.12 | 0.20 | 0.160 | - | 0.102 | - | - | 0.02 | - | 0.0019 | - | - | - | 34.0 |
| J | 0.014 | 0.25 | 0.95 | 0.024 | 0.0005 | 5.69 | 22.31 | 3.12 | 0.20 | 0.157 | - | - | - | - | 0.51 | 0.0023 | - | - | 0.031 | - | 34.2 |
| K | 0.025 | 0.47 | 1.15 | 0.018 | 0.0012 | 7.98 | 28.44 ** | 0.30 | 0.99 | 0.190 | 0.30 | 0.330 | - | 0.041 | - | - | - | - | 0.37 | - | 31.8 |
| L | 0.005 | 0.95 | 1.47 | 0.012 | 0.0025 | 6.10 | 20.20 | 5.05 ** | 1.32 | 0.110 | 0.11 | - | - | - | - | - | - | - | - | - | 37.3 |
| M | 0.029 | 1.21 ** | 1.05 | 0.019 | 0.0009 | 8.15 | 27.11 | 1.02 | 0.03 | 0.191 | - | - | - | - | - | 0.0024 | - | 0.0023 | 0.030 | - | 32.5 |
| N | 0.028 | 0.74 | 1.80 | 0.017 | 0.0005 | 4.51 | 22.04 | 0.51 | 0.89 | 0.104 | - | - | 0.08 | 0.020 | - | - | 0.0042 | - | - | - | 23.6 * |

The mark "*" indicates that the value fell out of the range defined in the present invention.

The mark "**" indicates that the value fell out of the preferable range described in the present invention.

Characteristic values of the duplex stainless clad steels were measured under various conditions shown in Table 2. The conditions for the measurement specifically includes a heating temperature in the vacuum drawing, the degree of vacuum of the lamination surface, the heating temperature of the hot rolling, the rolling reduction in the temperature region of 1000°C or more, the rolling time in the temperature region of 950°C or less, the rolling end temperature, and the average cooling rate in the temperature region from 850 to 650°C.

Here, items of the producing conditions shown in Table 2 will be described. In Table 2, $T_1$ indicates the heating temperature (°C) in the vacuum drawing, and the DEGREE OF VACUUM indicates the degree of vacuum of the lamination surface. $T_2$ indicates the heating temperature (°C) before the rolling, ROLLING REDUCTION indicates rolling reduction (%) at 1000°C or more in terms of the steel plate surface temperature. ROLLING TIME indicates the rolling time (s) at 950°C or less in terms of the steel plate surface temperature, and END TEMPERATURE indicates the steel plate surface temperature (°C) at an end of the rolling. COOLING RATE indicates the average cooling rate (°C/s) in the range from 850 to 650°C after the end of the rolling. The rolling reduction is calculated as (plate thickness before rolling - plate thickness after rolling) / (plate thickness before rolling).

The resultant duplex stainless clad steel plates were subjected to measurement of the hydrogen contents of their base metals and the cladding materials, a shearing test, measurement of the σ phase area fraction, and the ferric chloride corrosion test for the evaluation of the corrosion resistance. The measurement of the hydrogen contents of the base metals and the cladding materials was conducted by the inert gas fusion method and the thermal conductivity method specified in JIS Z 2614 (1990).

In the shearing strength test, measurement was conducted in conformity to JIS G 0601 (2012), on test specimens each including a cladding material having a plate thickness of 3 mm and a base metal having a plate thickness of 13 mm. The test specimens were taken from each clad steel plate at a 1/4 position, a 2/4 position, and a 3/4 position in a longitudinal direction and at a 1/4 position, 2/4 position, and a 3/4 position in a width direction, 9 spots in total, two test specimens at each spot, 18 test specimens in total. A lowest value of shearing strengths of the 18 test specimens is defined as a shearing strength of each clad steel plate.

The longitudinal direction of each test specimen was set to coincide with a width direction of each steel plate. To create the test specimens, the shaved amount of the cladding materials when shaved off was determined by adding 0 to 0.1 mm to a plate thickness of the cladding material and adjusted in such a manner that the base metal was not to be shaved by more than 0.1 mm.

For the σ phase area fraction, test specimens were taken from each steel plate at a 1/4 position, a 2/4 position, and a 3/4 position in a longitudinal direction and a 1/4 position, a 2/4 position, and a 3/4 position in a width direction, 9 spots in total, one test specimen at each spot, surfaces of their cladding materials were cut by 0.5 mm and then embedded in resin, and their surfaces were polished to mirror finish. Thereafter, the surfaces were etched with KOH, then two 50 μm × 50 μm visual fields of each surface were observed under an optical microscope with 1000x magnification, pictures of captured visual fields were image-processed to determine σ phase area fractions, an average value of which was determined as a measured value.

The critical pitting temperature (denoted as "CPT" in Table 2) and the critical pitting temperature difference (denoted as "CPT DIFF." in Table 2) were measured by the ferric chloride corrosion test conforming to ASTM G 48, Method E.

For the critical pitting temperature, in a cladding material of each duplex stainless clad steel plate, an evaluation plane was set at a 0.5-mm position from a surface of the cladding material in a plate thickness direction, test specimens were taken at a 1/4 position, a 1/2 position, and a 3/4 position in a longitudinal direction of the steel plate and a 1/4 position, a 1/2 position, and a 3/4 position in a width direction of the steel plate, one test specimen for each spot, 9 test specimens in total were subjected to the measurement. A lowest value (°C) of the measured critical pitting temperatures was determined as the critical pitting temperature.

For the critical pitting temperature difference, similarly, in a cladding material obtained by subjecting each duplex stainless clad steel plate to the solution treatment at 1050°C for 10 minutes, an evaluation plane was set at a 0.5-mm position from a surface of the cladding material in a plate thickness direction, test specimens were taken at a 1/4 position, a 1/2 position, and a 3/4 position in a longitudinal direction of the steel plate and a 1/4 position, a 1/2 position, and a 3/4 position in a width direction of the steel plate, one test specimen for each spot, 9 test specimens in total were subjected to the measurement. Then, the critical pitting temperature difference was determined by subtracting, from a lowest value of the measured critical pitting temperatures, a critical pitting temperature of a case where the solution treatment was not performed.

The producing conditions and results of the above are shown in Table 2.

[Table 2]

TABLE 2

| SAM-PLE No. | CLADDIG MATERI-AL STEEL | VACUUM CONDITIONS | | HOT ROLLING | | | | | HYDROGEN CONTENT | | MECHANI-CAL PROP-ERTY | CLADDING MATERIAL STRUC-TURE | CORROSION RESISTANCE | | |
|---|---|---|---|---|---|---|---|---|---|---|---|---|---|---|---|
| | | T1 (°C) | DE-GREE OF VAC-UUM (Torr) | T2 (°C) | ROLLING REDUC-TION (%) | ROLL-ING TIME (s) | END TEM-PERATURE (°C) | COOL-ING RATE (°C/s) | CLAD-DING MA-TERIAL (ppm) | BASE MET-AL (ppm) | SHEARING STRENGTH (MPa) | α PHASE FRACTION (%) | CPT (°C) | CPT DIFF. (°C) | |
| 1-1 | A | 350 | 0.083 | 1100 | 80 | 0 | 968 | 0.5 | 2.4 | 0.6 | 385 | 0.08 | 65.0 | 0 | INVENTIVE EXAMPLE |
| 1-2 | A | 200 | 0.010 | 1150 | 60 | 14 | 926 | 1.0 | 2.9 | 0.8 | 370 | 0.18 | 60.0 | 5 | INVENTIVE EXAMPLE |
| 13 | A | 150 | 0.007 | 1150 | 70 | 17 | 929 | 4.8 | 3.1 * | 0.9 | 307 * | 0.20 | 60.0 | 5 | COMPARA-TIVE EXAM-PLE |
| 1-4 | A | 300 | 0.024 | 1200 | 65 | 68 | 859 | 1.6 | 2.7 | 0.6 | 361 | 0.56 ** | 50.0 | 15 | INVENTIVE EXAMPLE |
| 2-1 | B | 300 | 0.005 | 1200 | 70 | 46 | 875 | 1.1 | 23 | 0.8 | 425 | 0.47 | 35.0 | 10 | INVENTIVE EXAMPLE |
| 2-2 | B | 300 | 0.008 | 1150 | 85 | 0 | 974 | 1.3 | 2.1 | 0.7 | 429 | 0 | 45.0 | 0 | INVENTIVE EXAMPLE |
| 23 | B | 450 | 0.118 | 1100 | 65 | 34 | 928 | 5.3 | 1.9 | 0.4 | 332 * | 0.33 | 40.0 | 5 | COMPARA-TIVE EXAM-PLE |
| 2-4 | B | 250 | 0.049 | 1150 | 70 | 54 | 836 | 0.9 | 26 | 0.8 | 370 | 0.66 ** | 30.0 | 15 | INVENTIVE EXAMPLE |
| 3-1 | C | 450 | 0.003 | 1250 | 70 | 0 | 951 | 11.4 | 1.3 | 0.6 | 366 | 0.07 | 25.0 | 0 | INVENTIVE EXAMPLE |
| 3-2 | C | 350 | 0.062 | 1050 | 60 | 20 | 901 | 1.4 | 1.8 | 0.9 | 352 | 0.04 | 25.0 | 0 | INVENTIVE EXAMPLE |

| SAM-PLE No. | CLADDIG MATERI-AL STEEL | VACUUM CONDITIONS | | HOT ROLLING | | | | | HYDROGEN CONTENT | | MECHANI-CAL PROP-ERTY | CLADDING MATERIAL STRUC-TURE | CORROSION RESISTANCE | | |
|---|---|---|---|---|---|---|---|---|---|---|---|---|---|---|---|
| | | T1 (°C) | DE-GREE OF VAC-UUM (Torr) | T2 (°C) | ROLLING REDUC-TION (%) | ROLL-ING TIME (s) | END TEM-PERATURE (°C) | COOL-ING RATE (°C/s) | CLAD-DING MA-TERIAL (ppm) | BASE MET-AL (ppm) | SHEARING STRENGTH (MPa) | α PHASE FRACTION (%) | CPT (°C) | CPT DIFF. (°C) | |
| 33 | C | 350 | 0.062 | 1025 | 60 | 20 | 901 | 1.4 | 1.8 | 0.9 | 345 * | 0.04 | 25.0 | 0 | COMPARA-TIVE EXAM-PLE |
| 4-1 | D | 250 | 0.015 | 1150 | 65 | 41 | 872 | 1.8 | 2.7 | 0.9 | 405 | 0.25 | 25.0 | 5 | INVENTIVE EXAMPLE |
| 4-2 | D | 400 | 0.008 | 1250 | 80 | 4 | 945 | 1.5 | 1.9 | 0.5 | 421 | 0 | 30.0 | 0 | INVENTIVE EXAMPLE |
| 4-3 | D | 300 | 0.029 | 1025 | 60 | 53 | 854 | 7.5 | 1.9 | 0.4 | 338 * | 0.44 | 25.0 | 5 | COMPARA-TIVE EXAM-PLE |
| 5-1 | E | 350 | 0.013 | 1050 | 75 | 4 | 945 | 13.5 | 2.9 | 0.9 | 378 | 0.07 | 40.0 | 0 | INVENTIVE EXAMPLE |
| 5-2 | E | 350 | 0.001 | 1150 | 70 | 37 | 891 | 1.6 | 1.8 | 0.9 | 412 | 0.46 | 30.0 | 10 | INVENTIVE EXAMPLE |
| 53 | E | 300 | 0.092 | 1100 | <u>55</u> | 25 | 907 | 1.9 | 1.3 | 0.6 | 340 * | 0.23 | 35.0 | 5 | COMPARA-TIVE EXAM-PLE |
| 5- 4 | E | 300 | 0.062 | 1100 | 70 | 26 | 914 | <u>0.3</u> | 1.5 | 0.8 | 361 | 0.59 ** | 25.0 | 15 | INVENTIVE EXAMPLE |
| 6-1 | F | 400 | 0.029 | 1250 | 75 | 35 | 890 | 19.8 | 1.9 | 0.4 | 374 | 0.40 | 40.0 | 10 | INVENTIVE EXAMPLE |
| 6-2 | F | 450 | 0.052 | 1050 | 70 | 19 | 927 | 10.4 | 2.4 | 0.9 | 381 | 0.21 | 55.0 | 5 | INVENTIVE EXAMPLE |

(continued)

| SAMPLE No. | CLADDIG MATERIAL STEEL | VACUUM CONDITIONS | | HOT ROLLING | | | | | HYDROGEN CONTENT | | MECHANICAL PROPERTY | CLADDING MATERIAL STRUCTURE | CORROSION RESISTANCE | | |
|---|---|---|---|---|---|---|---|---|---|---|---|---|---|---|---|
| | | T1 (°C) | DEGREE OF VACUUM (Torr) | T2 (°C) | ROLLING REDUCTION (%) | ROLLING TIME (s) | END TEMPERATURE (°C) | COOLING RATE (°C/s) | CLADDING MATERIAL (ppm) | BASE METAL (ppm) | SHEARING STRENGTH (MPa) | α PHASE FRACTION (%) | CPT (°C) | CPT DIFF. (°C) | |
| 63 | F | 150 | 0.092 | 1150 | 65 | 33 | 885 | 4.7 | 2.6 | 1.1 * | 317 * | 0.37 | 40.0 | 10 | COMPARATIVE EXAMPLE |
| 6-4 | F | 450 | 0.003 | 1200 | 75 | 70 | 855 | 11.4 | 1.3 | 0.6 | 378 | 0.66 ** | 45.0 | 15 | INVENTIVE EXAMPLE |
| 7-1 | G | 200 | 0.079 | 1200 | 75 | 0 | 954 | 4.3 | 26 | 0.2 | 403 | 0.10 | 55.0 | 0 | INVENTIVE EXAMPLE |
| 7-2 | G | 250 | 0.002 | 1200 | 75 | 16 | 934 | 6.3 | 2.4 | 0.7 | 374 | 0.17 | 50.0 | 5 | INVENTIVE EXAMPLE |
| 73 | G | 300 | 0.052 | 1100 | 55 | 30 | 894 | 9.5 | 2.2 | 0.3 | 343 * | 0.44 | 45.0 | 10 | COMPARATIVE EXAMPLE |
| 7-4 | G | 300 | 0005 | 1200 | 60 | 50 | 840 | 0.7 | 2.1 | 0.5 | 371 | 0.69 ** | 40.0 | 15 | INVENTIVE EXAMPLE |
| 8-1 | H | 300 | 0.080 | 1050 | 80 | 19 | 930 | 15.6 | 2.2 | 0.4 | 388 | 0.30 | 50.0 | 5 | INVENTIVE EXAMPLE |
| 8-2 | H | 400 | 0.064 | 1200 | 60 | 50 | 853 | 16.8 | 1.8 | 0.3 | 424 | 0.48 | 45.0 | 10 | INVENTIVE EXAMPLE |
| 83 | H | 450 | 0 109 | 1200 | 75 | 5 | 948 | 1.7 | 2.7 | 0.9 | 320 * | 0 | 55.0 | 0 | COMPARATIVE EXAMPLE |
| 8-4 | H | 350 | 0.014 | 1200 | 75 | 0 | 960 | 0.4 | 2.8 | 0.9 | 387 | 0.69 ** | 40.0 | 15 | INVENTIVE EXAMPLE |

(continued)

| SAM-PLE No. | CLADDIG MATERI-AL STEEL | VACUUM CONDITIONS | | HOT ROLLING | | | | | HYDROGEN CONTENT | | MECHANI-CAL PROP-ERTY | CLADDING MATERIAL STRUC-TURE | CORROSION RESISTANCE | | |
|---|---|---|---|---|---|---|---|---|---|---|---|---|---|---|---|
| | | T1 (°C) | DE-GREE OF VAC-UUM (Torr) | T2 (°C) | ROLLING REDUC-TION (%) | ROLL-ING TIME (s) | END TEM-PERATURE (°C) | COOL-ING RATE (°C/s) | CLAD-DING MA-TERIAL (ppm) | BASE MET-AL (ppm) | SHEARING STRENGTH (MPa) | α PHASE FRACTION (%) | CPT (°C) | CPT DIFF. (°C) | |
| 9-1 | I | 300 | 0.005 | 1200 | 70 | 45 | 877 | 1.1 | 2.2 | 0.8 | 422 | 0.47 | 40.0 | 0 | INVENTIVE EXAMPLE |
| 9-2 | I | 450 | 0.120 | 1100 | 65 | 33 | 930 | 5.3 | 1.9 | 0.5 | 331 * | 0.15 | 40.0 | 5 | COMPARA-TIVE EXAM-PLE |
| 10.1 | 1 | 300 | 0.008 | 1150 | 85 | 0 | 977 | 1.3 | 20 | 0.7 | 430 | 0 | 45.0 | 0 | INVENTIVE EXAMPLE |
| 10.2 | 1 | 250 | 0.045 | 1150 | 70 | 52 | 837 | 0.9 | 2.6 | 0.9 | 371 | 0.61 ** | 45.0 | 15 | INVENTIVE EXAMPLE |
| 11-1 | K" | 200 | 0.098 | 1050 | 80 | 19 | 926 | 6.8 | 2.3 | 0.8 | 391 | 0.71 ** | 25.0 | 15 | INVENTIVE EXAMPLE |
| 11-2 | K" | 250 | 0.065 | 1100 | 70 | 58 | 825 | 12.2 | 26 | 0.6 | 379 | 0.85 ** | 20.0 | 20 | INVENTIVE EXAMPLE |
| 12-1 | L ** | 250 | 0.062 | 1100 | 75 | 38 | 888 | 3.9 | 2.3 | 0.5 | 411 | 0.71 ** | 40.0 | 15 | INVENTIVE EXAMPLE |
| 12-2 | L ** | 350 | 0.010 | 1100 | 70 | 35 | 892 | 15.3 | 2.7 | 0.5 | 368 | 0.91 ** | 35.0 | 20 | INVENTIVE EXAMPLE |
| 13-1 | M ** | 400 | 0.067 | 1150 | 75 | 24 | 910 | 19.9 | 1.1 | 0.7 | 366 | 0.61 ** | 25.0 | 15 | INVENTIVE EXAMPLE |
| 13-2 | M ** | 400 | 0.085 | 1050 | 65 | 23 | 906 | 12.7 | 1.9 | 0.2 | 394 | 0.73 ** | 25.0 | 15 | INVENTIVE EXAMPLE |

(continued)

| SAM-PLE No. | CLADDIG MATERI-AL STEEL | VACUUM CONDITIONS | | HOT ROLLING | | | | | HYDROGEN CONTENT | | MECHANICAL PROPERTY | CLADDING MATERIAL STRUCTURE | CORROSION RESISTANCE | | |
|---|---|---|---|---|---|---|---|---|---|---|---|---|---|---|---|
| | | T1 (°C) | DEGREE OF VACUUM (Torr) | T2 (°C) | ROLLING REDUCTION (%) | ROLLING TIME (s) | END TEMPERATURE (°C) | COOLING RATE (°C/s) | CLADDING MATERIAL (ppm) | BASE METAL (ppm) | SHEARING STRENGTH (MPa) | α PHASE FRACTION (%) | CPT (°C) | CPT DIFF. (°C) | |
| 14-1 | N* | 250 | 0.075 | 1100 | 75 | 0 | 952 | 0.9 | 20 | 0.3 | 354 | 0.18 | 15.0 | 5 | COMPARATIVE EXAMPLE |
| 14-2 | N* | 450 | 0.027 | 1200 | 70 | 46 | 873 | 9.5 | 20 | 1.0 | 409 | 0.49 | 10.0 | 10 | COMPARATIVE EXAMPLE |

The mark "*" indicates that the value fell out of the range specified in the present invention. The underline indicates that the value fell out of the preferable producing condition described in the present invention. The mark "**" indicates that the value fell out of the preferable range described in the present invention.

Samples 1-1 and 1-2 were inventive examples of the present invention and provided good corrosion resistances (critical pitting temperatures) and good shearing strengths. In contrast, in a sample 1-3, its heating temperature of the vacuum drawing was low, resulting in a high hydrogen content of its cladding material and in a decrease in the shearing strength. A sample 1-4 was an inventive example of the present invention and provided a good corrosion resistance (critical pitting temperature) and a good shearing strength, but its rolling time at 950°C or less in terms of the steel plate surface temperature was long, and thus the precipitation of σ phases was promoted, resulting in a somewhat large critical pitting temperature difference.

Samples 2-1 and 2-2 were inventive examples of the present invention and provided good corrosion resistances and good shearing strengths. In contrast, in a sample 2-3, its degree of vacuum of the bonding interface was low, failing to provide a sufficient bonding of the interface and resulting in a decrease in the shearing strength. A sample 2-4 was the present invention example and provided a good corrosion resistance (critical pitting temperature) and a good shearing strength, but its rolling end temperature was low, and thus the precipitation of σ phases was promoted, resulting in a somewhat large critical pitting temperature difference.

Samples 3-1 and 3-2 were inventive examples of the present invention and provided good corrosion resistances and good shearing strengths. In a sample 3-3, its rolling end temperature was low, resulting in a decrease in the shearing strength.

Samples 4-1 and 4-2 were inventive examples of the present invention and provided good corrosion resistances and good shearing strengths. In a sample 4-3, its heating temperature before the rolling was low, failing to provide a sufficient bonding of its bonding interface and resulting in a decrease in the shearing strength.

Samples 5-1 and 5-2 were inventive examples of the present invention and provided good corrosion resistances and good shearing strengths. In a sample 5-3, its rolling reduction at 1000°C or more in terms of the steel plate surface temperature was low, failing to provide a sufficient bonding of its interface and resulting in a decrease in the shearing strength. A sample 5-4 was an inventive example of the present invention and provided a good corrosion resistance (critical pitting temperature) and a good shearing strength, but its cooling rate after the rolling was low, and thus the precipitation of σ phases was promoted, resulting in a somewhat large critical pitting temperature difference.

Samples 6-1 and 6-2 were inventive examples of the present invention and provided good critical pitting temperatures and good shearing strengths. In a sample 6-3, its heating temperature of the vacuum drawing was low, resulting in a high hydrogen content of its base metal and in a decrease in the shearing strength. A sample 6-4 was an inventive example of the present invention, but its rolling time at 950°C or less in terms of the steel plate surface temperature was long, and thus the precipitation of σ phases was promoted, resulting in a large critical pitting temperature difference.

Samples 7-1 and 7-2 were inventive examples of the present invention and provided good critical pitting temperatures and good shearing strengths. In a sample 7-3, its rolling reduction in a temperature range of 1000°C or more in terms of the steel plate surface temperature was low, failing to provide a sufficient bonding of its interface and resulting in a decrease in the shearing strength. A sample 7-4 was the present invention example, but its rolling end temperature was low, and thus the precipitation of σ phases was promoted, resulting in a large critical pitting temperature difference.

Samples 8-1 and 8-2 were inventive examples of the present invention and provided good critical pitting temperatures and good shearing strengths. In a sample 8-3, its degree of vacuum was low, failing to provide a sufficient bonding of its interface and resulting in a decrease in the shearing strength. A sample 8-4 was an inventive example of the present invention and provided a good corrosion resistance (critical pitting temperature) and a good shearing strength, but its cooling rate after the rolling was low, and thus the precipitation of σ phases was promoted, resulting in a somewhat large critical pitting temperature difference.

A sample 9-1 was an inventive example of the present invention and provided a good corrosion resistance and a good shearing strength. In contrast, in a sample 9-2, its degree of vacuum of the bonding interface was low, failing to provide a sufficient bonding of the interface and resulting in a decrease in the shearing strength.

A sample 10-1 was an inventive example of the present invention and provided a good corrosion resistance and a good shearing strength. In contrast, a sample 10-2 was an inventive example of the present invention and provided a good corrosion resistance (critical pitting temperature) and a good shearing strength, but its rolling end temperature was low, and thus the precipitation of σ phases was promoted, resulting in a somewhat large critical pitting temperature difference.

Samples 11-1 and 11-2 were inventive examples of the present invention and provided good corrosion resistances (critical pitting temperatures) and good shearing strengths, but their contents of Cr did not satisfy the preferable range specified in the present invention, resulting in a large critical pitting temperature difference. Samples 12-1 and 12-2 were also inventive examples of the present invention and provided good corrosion resistances (critical pitting temperatures) and good shearing strengths, but their contents of Mo did not satisfy the preferable range specified in the present invention, resulting in a large critical pitting temperature difference. Similarly, in samples 13-1 and 13-2, their contents of Si did not satisfy the preferable range specified in the present invention, resulting in a somewhat large critical pitting temperature difference.

In samples 14-1 and 14-2, their PREN_Mn values did not satisfy the specification of the present invention, and thus their critical pitting temperatures were less than 25°C, failing to provide a desired corrosion resistance.

As described above, the inventive examples of the present invention provided good corrosion resistances and good shearing strengths. In contrast, in comparative examples, one of their PREN_Mn values, heating temperatures in the vacuum drawing, degrees of vacuum of the lamination interface, heating temperatures before the rolling, rolling reductions, rolling times, end temperatures, cooling rates, and hydrogen contents of their cladding materials or base metals did not satisfy the corresponding specification or preferable producing condition of the present invention, resulting in a decrease in the corrosion resistance or the shearing strength.

## Claims

1. A duplex stainless clad steel plate that comprises a base metal and a cladding material bonded to the base metal, wherein

    the base metal is made of a carbon steel or a low alloy steel,
    the cladding material is made of a duplex stainless steel having a chemical composition that satisfies a value of modified pitting resistance equivalent number PREN_Mn in a range from 25 to 40, the modified pitting resistance equivalent number being calculated by the following formula (i),
    a hydrogen content of the base metal is 1.0 ppm or less, and a hydrogen content of the cladding material is 3.0 ppm or less, wherein the hydrogen content is measured by the inert gas fusion method and the thermal conductivity method specified in JIS Z 2614:1990, and
    a shearing strength of a bonding interface between the base metal and the cladding material is 350 MPa or more, wherein the shearing strength is measured by the shearing strength test conforming to JIS G 0601:2012:

$$PREN\_Mn = Cr + 3.3\,(Mo + 0.5W) + 16N - Mn \dots (i)$$

    where each symbol of an element in the formula (i) indicates a content of each element in mass percent contained in the steel, and zero means a case where an element in question is not contained.

2. The duplex stainless clad steel plate according to claim 1, wherein an area fraction of a σ phase is less than 0.5% at a 0.5-mm position from a surface of the cladding material in a plate thickness direction.

3. The duplex stainless clad steel plate according to claim 1 or 2, wherein the chemical composition of the duplex stainless steel consists of, in mass percent:

    C: 0.030% or less;
    Si: 1.00% or less;
    Mn: 4.00% or less;
    P: 0.050% or less;
    S: 0.050% or less;
    Ni: 2.00 to 10.00%;
    Cr: 20.00 to 28.00%;
    Mo: 5.00% or less;
    Cu: 1.50% or less;
    N: 0.080 to 0.300%;
    W: 0 to 3.00%;
    V: 0 to 0.50%;
    Nb: 0 to 0.20%;
    Ti: 0 to 0.050%;
    Co: 0 to 1.50%;
    B: 0 to 0.0050%;
    Ca: 0 to 0.0050%;
    Mg: 0 to 0.0030%;
    Al: 0 to 0.50%;
    REM: 0 to 0.50%; and
    the balance: Fe and unavoidable impurities.

4. The duplex stainless clad steel plate according to claim 3, wherein the chemical composition of the duplex stainless steel contains one or more elements selected from, in mass percent:

W: 0.1 to 3.00%;
V: 0.05 to 0.50%;
Nb: 0.01 to 0.20%;
Ti: 0.003 to 0.050%; and
Co: 0.01 to 1.50%.

5. The duplex stainless clad steel plate according to claim 3 or 4, wherein the chemical composition of the duplex stainless steel contains one or more elements selected from, in mass percent:

B: 0.0003 to 0.0050%;
Ca: 0.0001 to 0.0050%;
Mg: 0.0001 to 0.0030%;
Al: 0.0030 to 0.50%; and
REM: 0.005 to 0.50%.

6. A method for producing the duplex stainless clad steel plate according to any one of claims 1 to 5, the method comprising:

(a) a step of laminating a base metal made of a carbon steel or a low alloy steel having a surface and provided in advance with a hole that communicates with the surface, and a cladding material including a surface and made of a duplex stainless steel having the chemical composition according to any one of claims 1 and 3 to 5, forming a lamination surface by causing the surfaces to abut against each other, and sealing a circumference of the lamination surface by welding, to produce a clad rolled material;
(b) a step of performing vacuum drawing from the hole communicating with the lamination surface while heating the clad rolled material to a temperature of 200°C or more so that a degree of vacuum of the lamination surface reaches 0.10 Torr (13.3 Pa) or less; and
(c) a step of heating, after the step (b), the clad rolled material within a range from 1050 to 1250°C, performing hot rolling with a rolling reduction of 60% or more within a temperature range of 1000°C or more, to produce the duplex stainless clad steel plate.

7. The method for producing the duplex stainless clad steel plate according to claim 6, wherein, in the step (c), a rolling time at 950°C or less is set at 60 second or less, a rolling end temperature in the hot rolling is set at 850°C or more, and thereafter, an average cooling rate within a temperature range from 850°C to 650°C is set at 0.5°C/s or more.

**Patentansprüche**

1. Plattiertes rostfreies Duplex-Stahlblech, das ein Grundmetall und ein mit dem Grundmetall verbundenes Plattierungsmaterial umfasst, wobei

das Grundmetall aus einem Kohlenstoffstahl oder einem niedrig legierten Stahl hergestellt ist,
das Plattierungsmaterial aus einem rostfreien Duplexstahl mit einer chemischen Zusammensetzung hergestellt ist, die einen Wert der modifizierten Lochfraßwiderstandsäquivalenzzahl PREN_Mn in einem Bereich von 25 bis 40 erfüllt, wobei die modifizierte Lochfraßwiderstandsäquivalenzzahl durch die folgende Formel (i) berechnet wird,
ein Wasserstoffgehalt des Grundmetalls 1,0 ppm oder weniger beträgt, und ein Wasserstoffgehalt des Plattierungsmaterials 3,0 ppm oder weniger beträgt, wobei der Wasserstoffgehalt durch das Inertgas-Schmelzverfahren und das Wärmeleitfähigkeitsverfahren gemäß JIS Z 2614:1990 gemessen wird, und
eine Scherfestigkeit einer Verbindungsgrenzfläche zwischen dem Grundmetall und dem Plattierungsmaterial 350 MPa oder mehr beträgt, wobei die Scherfestigkeit durch den Scherfestigkeitstest gemäß JIS G 0601:2012 gemessen wird:

$$PREN\_Mn = Cr + 3{,}3\,(Mo + 0{,}5W) + 16N - Mn \ldots (i)$$

wobei jedes Symbol eines Elements in der Formel (i) den Gehalt des jeweiligen Elements in Massenprozent angibt, der in dem Stahl enthalten ist, und Null einen Fall bedeutet, in dem das betreffende Element nicht enthalten ist.

2. Plattiertes rostfreies Duplex-Stahlblech nach Anspruch 1, wobei ein Flächenanteil einer σ-Phase weniger als 0,5% in einer 0,5-mm-Position von einer Oberfläche des Plattierungsmaterials in Blechdickenrichtung beträgt.

3. Plattiertes rostfreies Duplex-Stahlblech nach Anspruch 1 oder 2, wobei die chemische Zusammensetzung des rostfreien Duplexstahls in Massenprozent besteht aus:

C: 0,030% oder weniger;
Si: 1,00% oder weniger;
Mn: 4,00% oder weniger;
P: 0,050% oder weniger;
S: 0,050% oder weniger;
Ni: 2,00 bis 10,00%;
Cr: 20,00 bis 28,00%;
Mo: 5,00% oder weniger;
Cu: 1,50% oder weniger;
N: 0,080 bis 0,300%;
W: 0 bis 3,00%;
V: 0 bis 0,50%;
Nb: 0 bis 0,20%;
Ti: 0 bis 0,050%;
Co: 0 bis 1,50%;
B: 0 bis 0,0050%;
Ca: 0 bis 0,0050%;
Mg: 0 bis 0,0030%;
Al: 0 bis 0,50%;
REM: 0 bis 0,50%; und
dem Rest: Fe und unvermeidbare Verunreinigungen.

4. Plattiertes rostfreies Duplex-Stahlblech nach Anspruch 3, wobei die chemische Zusammensetzung des rostfreien Duplex-Stahls ein oder mehrere Elemente enthält, die ausgewählt sind aus, in Massenprozent:

W: 0,1 bis 3,00%;
V: 0,05 bis 0,50%;
Nb: 0,01 bis 0,20%;
Ti: 0,003 bis 0,050%; und
Co: 0,01 bis 1,50%.

5. Plattiertes rostfreies Duplex-Stahlblech nach Anspruch 3 oder 4, wobei die chemische Zusammensetzung des rostfreien Duplex-Stahls ein oder mehrere Elemente enthält, die ausgewählt sind aus, in Massenprozent:

B: 0,0003 bis 0,0050%;
Ca: 0,0001 bis 0,0050%;
Mg: 0,0001 bis 0,0030%;
Al: 0,0030 bis 0,50%; und
REM: 0,005 bis 0,50%.

6. Verfahren zur Herstellung eines plattierten rostfreien Duplex-Stahlblechs nach einem der Ansprüche 1 bis 5, wobei das Verfahren umfasst:

(a) einen Schritt des Laminierens eines Grundmetalls, das aus einem Kohlenstoffstahl oder einem niedrig legierten Stahl hergestellt ist, der eine Oberfläche aufweist und im Voraus mit einem Loch versehen ist, das mit der Oberfläche in Verbindung steht, und eines Plattierungsmaterials, das eine Oberfläche aufweist und aus einem rostfreien Duplexstahl hergestellt ist, der die chemische Zusammensetzung gemäß irgendeinem der Ansprüche 1 und 3 bis 5 aufweist, Bilden einer Laminierungsoberfläche, indem die Oberflächen veranlasst werden, aneinander anzustoßen, und Versiegeln eines Umfangs der Laminierungsoberfläche durch Schweißen, um ein plattiertes Walzmaterial herzustellen;
(b) einen Schritt des Durchführens von Vakuumziehen aus dem Loch, das mit der Laminierungsoberfläche in Verbindung steht, während das plattierte Walzmaterial auf eine Temperatur von 200°C oder mehr erhitzt wird, so dass ein Vakuumgrad der Laminierungsoberfläche 0,10 Torr (13,3 Pa) oder weniger erreicht; und
(c) einen Schritt des Erwärmens des plattierten Walzmaterials nach dem Schritt (b) in einem Bereich von 1050 bis 1250°C, wobei ein Warmwalzen mit einer Walzreduktion von 60% oder mehr in einem Temperaturbereich von 1000°C oder mehr durchgeführt wird, um das plattierte rostfreie Duplex-Stahlblech herzustellen.

7. Verfahren zur Herstellung des plattiertes rostfreien Duplex-Stahlblechs nach Anspruch 6, wobei im Schritt (c) eine Walzzeit bei 950°C oder weniger auf 60 Sekunden oder weniger eingestellt wird, eine Walzendtemperatur beim Warmwalzen auf 850°C oder mehr eingestellt wird, und danach eine durchschnittliche Abkühlungsrate innerhalb eines Temperaturbereichs von 850°C bis 650°C auf 0,5°C/s oder mehr eingestellt wird.

**Revendications**

1. Plaque d'acier plaquée inoxydable duplex qui comprend un métal de base et un matériau de placage lié au métal de base, où

le métal de base est fait d'un acier au carbone ou d'un acier faiblement allié,
le matériau de placage est fait d'un acier inoxydable duplex ayant une composition chimique qui satisfait une valeur d'indice équivalent de résistance aux piqûres modifié PREN_Mn dans une plage de 25 à 40, l'indice équivalent de résistance aux piqûres modifié étant calculé par la formule (i) suivante,
une teneur en hydrogène du métal de base est de 1,0 ppm ou moins, et une teneur en hydrogène du matériau de placage est de 3,0 ppm ou moins, où la teneur en hydrogène est mesurée par le procédé de fusion en gaz inerte et le procédé de conductivité thermique spécifié dans JIS Z 2614: 1990, et
une résistance au cisaillement d'une interface de liaison entre le métal de base et le matériau de placage est de 350 MPa ou plus, où la résistance au cisaillement est mesurée par l'essai de résistance au cisaillement selon JIS G 0601:2012:

$$PREN\_Mn = Cr + 3,3\,(Mo + 0,5W) + 16N - Mn \ldots (i)$$

où chaque symbole d'un élément dans la formule (i) indique une teneur de chaque élément en pourcentage en masse contenu dans l'acier, et zéro signifie un cas où un élément en question n'est pas contenu.

2. Plaque d'acier plaquée inoxydable duplex selon la revendication 1, où une fraction d'aire d'une phase $\sigma$ est inférieure à 0,5 % à une position à 0,5 mm d'une surface du matériau de placage dans une direction de l'épaisseur de la plaque.

3. Plaque d'acier plaquée inoxydable duplex selon la revendication 1 ou 2, où la composition chimique de l'acier inoxydable duplex consiste en, en pourcentage en masse:

C: 0,030 % ou moins;
Si: 1,00 % ou moins;
Mn: 4,00 % ou moins;
P: 0,050 % ou moins;
S: 0,050 % ou moins;
Ni: 2,00 à 10,00 %;
Cr: 20,00 à 28,00 %;
Mo: 5,00 % ou moins;
Cu: 1,50 % ou moins;
N: 0,080 à 0,300 %;
W: 0 à 3,00 %;
V: 0 à 0,50 %;
Nb: 0 à 0,20 %;
Ti: 0 à 0,050 %;
Co: 0 à 1,50 %;

B: 0 à 0,0050 %;
Ca: 0 à 0,0050 %;
Mg: 0 à 0,0030 %;
Al: 0 à 0,50 %;
MTR: 0 à 0,50 %; et
le solde: Fe et impuretés inévitables.

4. Plaque d'acier plaquée inoxydable duplex selon la revendication 3, où la composition chimique de l'acier inoxydable duplex contient un ou plusieurs éléments choisis parmi, en pourcentage en masse:

W: 0,1 à 3,00 %;
V: 0,05 à 0,50 %;
Nb: 0,01 à 0,20 %;
Ti: 0,003 à 0,050 %; et
Co: 0,01 à 1,50 %.

5. Plaque d'acier plaquée inoxydable duplex selon la revendication 3 ou 4, où la composition chimique de l'acier inoxydable duplex contient un ou plusieurs éléments choisis parmi, en pourcentage en masse:

B: 0,0003 à 0,0050 %;
Ca: 0,0001 à 0,0050 %;
Mg: 0,0001 à 0,0030 %;
Al: 0,0030 à 0,50 %; et
MTR: 0,005 à 0,50 %.

6. Procédé pour produire la plaque d'acier plaquée inoxydable duplex selon l'une quelconque des revendications 1 à 5, le procédé comprenant:

(a) une étape de stratification d'un métal de base fait d'un acier au carbone ou d'un acier faiblement allié ayant une surface et muni à l'avance d'un trou qui communique avec la surface, et d'un matériau de placage incluant une surface et fait d'un acier inoxydable duplex ayant la composition chimique selon l'une quelconque des revendications 1 et 3 à 5, de formation d'une surface de stratification en amenant les surfaces à venir en butée l'une contre l'autre, et de scellement d'une circonférence de la surface de stratification par soudage, pour produire un matériau laminé plaqué;
(b) une étape de réalisation d'un étirage sous vide à partir du trou communiquant avec la surface de stratification tout en chauffant le matériau laminé plaqué à une température de 200°C ou plus de sorte qu'un degré de vide de la surface de stratification atteigne 0,10 Torr (13,3 Pa) ou moins; et
(c) une étape de chauffage, après l'étape (b), du matériau laminé plaqué dans une plage de 1050 à 1250°C, de réalisation d'un laminage à chaud avec une réduction par laminage de 60 % ou plus dans une plage de température de 1000°C ou plus, pour produire la plaque d'acier plaquée inoxydable duplex.

7. Procédé pour produire la plaque d'acier plaquée inoxydable duplex selon la revendication 6, où, dans l'étape (c), un temps de laminage à 950°C ou moins est fixé à 60 secondes ou moins, une température de fin de laminage dans le laminage à chaud est fixée à 850°C ou plus, et ensuite, une vitesse de refroidissement moyenne dans une plage de températures de 850°C à 650°C est fixée à 0,5°C/s ou plus.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6127939 B
- JP 6007803 A
- JP 3779043 B
- JP 5803890 B
- JP 5842993 B
- JP 2018028146 A